# EUROPEAN PATENT SPECIFICATION

(11) **EP 0 683 987 B1**
(45) Date of publication and mention of the grant of the patent: **01.08.2001**
(21) Application number: 95104759.6
(22) Date of filing: 30.03.1995
(51) Int. Cl.: A23L 1/317, A23L 1/325, A23L 1/314

(54) **Meat product**
Fleischprodukt
Produit à base de viande

(30) Priority: 26.05.1994 DE 4418448
(43) Date of publication of application: 29.11.1995
(73) Proprietor: UNILEVER PLC, London EC4P 4BQ (GB); UNILEVER N.V., 3013 AL Rotterdam (NL)
(72) Inventor: Horn, Hermann, D-91522 Ansbach (DE); Rössler, Manfred, D-91580 Petersaurach (DE); Brendel, Jakob, D-90574 Rosstal (DE)
(74) Representative: Dekker, Enno E.J.

(56) References cited:
- FR-A- 2 455 861
- FR-A- 2 601 562
- PATENT ABSTRACTS OF JAPAN vol. 015 no. 206 (C-0835) ,27 May 1991 & JP-A-03 058772 (SHIGEO YASUNO) 13 March 1991,

## Description

### Technical Field of Invention

The invention relates to meat products which are sliced for consumption.

### Background and Prior Art

It is desirable to be able to provide sliced meat products which have a reduced fat content. It is also advantageous to be able to provide sliced meat products which have a high nutritional content.

It is known in sausage technology to incorporate vegetable pieces into the sausage to replace some of the meat content. For example ZA8103984 discloses a sausage-like foodstuff comprising a flexible skin container surrounding a cooked, edible cereal and/or vegetable product. The sausage-like contents may contain.meat such as beef, pork and chicken and over 50% by weight of a cereal or vegetable product.

However, such products require the skin casing in order to retain their shape. The sausage composition does not bind together sufficiently in order to allow such products to be sliced.

To date it has not been possible to provide a sliceable meat product having a vegetable content of higher than about 20-25% by weight of the product.

Surprisingly, we have now been able to prepare a sliceable meat product comprising greater than 30% by weight vegetable. We have found that to incorporate high levels of vegetable into a meat product it is necessary that no more than 20 to 30% by weight of the product vegetable content is present as visible coarse ground pieces. The remaining vegetable must be present in a finely comminuted form.

### Disclosure of the Invention

Accordingly, the invention provides a sliceable meat product comprising meat and incorporated into the meat product one or more vegetable(s) and having a vegetable content of greater than 30% by weight of the product, wherein 20 - 30% by weight of the vegetable(s) is present as visible coarse ground particles with a particle size of 2-10 mm and the remaining vegetable content is finely comminuted.

Preferably the invention provides a sliceable meat product comprising
(a) greater than 30 to about 80% by weight of the vegetable(s)
(b) from 10 to 60% by weight of the product meat; and
(c) up to 20% by weight of the product functional ingredients;
providing that no more than from 20 to 30% by weight of the product vegetable is present as coarse ground vegetable pieces.

Preferably the vegetable is present in an amount of from 40 to 50% by weight of the product, and the meat is present from 45 to 50% by weight of the product.

Particularly preferred compositions contain
from 45 to 50% meat;
from 15 to 20% comminuted vegetable and
from 25 to 30% coarse ground vegetable.

Any vegetable is suitable for use. For example the vegetable may be selected from peas, sweetcorn, peppers, broccoli, potato, cabbage, carrots, celery, celeriac, leek, paprika, beetroot, chicory, fennel, aubergine, beans, corgettes, onion, tomato, spinach. Preferably the vegetable is selected from sweetcorn, peas, carrots, celery, celeriac, leek, paprika, potato and mixtures thereof.

The coarse ground vegetables may be for example whole peas or sweetcorn kernals or pieces of vegetable having a particle size of preferably from 2 to 10mm.

The vegetable may be incorporated into the product as fresh vegetables, frozen vegetables, dried vegetables or mixtures thereof.

Any meat is suitable for use, for example the meat may be selected from fish, beef, pork, chicken, lamb, turkey and mixtures thereof. Preferably lean meat is used in order to reduce the level of fat in the product as much as possible.

By functional ingredients is meant for example vegetable protein, cereals, and gums (such as guar gum, locust bean gum).

The meat product may also comprise additional ingredients such as salt, nitrite, ascorbic acid, phosphate, seasoning (such as pepper, nutmeg, chilli, ginger, cayenne pepper, mustard, piment).

Furthermore, the product may comprise ingredients having a high content of nutritional fibres, for example nuts, cereals and rice.

Products made according to the invention have a reduced fat content due to the lower meat content compared with conventional meat products of this type. Fat levels as low as 5 to 10% may be achieved. If desired some of the fat content may be replaced by vegetable oil.

The actual composition of the product may be varied according to dietary requirement. For example products having a high fibre content/low calorie/low fat may be provided.

The meat product may be a cooked meat product sold for example as sliced cooked meat ready for consumption or as a whole sausage for the consumer/retailer to slice as desired.

Alternatively the meat product may be a fermented salami-like product, such products may also be sold either as a whole salami for slicing by the retailer or consumer or ready sliced. In such salami-like products the fat content is lowered and the visible lard pieces usually characteristic of such products are replaced by vegetable pieces, particularly potato.

Further alternative product types are for example tinned meat products such as pork luncheon meat, which are again designed to be sliced before consumption.

Such meat products have many advantages. For example:
(a) The products are more nutritional than conventional sliced meat products, but have a similar appearance;
(b) The nutritional fibre content may be increased compared to conventional meat products;
(c) The fat content is very low and most of the fat has been replaced by carbohydrate, providing a more balanced nutritional product;
(d) The product is low calorie (for example 150kcal) without loss of sensory properties such as taste/texture.
(e) The level of nitrite may be reduced, because nitrite is added to stabilise meat colour and the levels of meat have been reduced.

The cooked meat products are prepared by
(a) Mixing the, meat, vegetable to be finely comminuted, salt, seasonings, binding agents etc in a bowl chopper;
(b) Adding the coarse ground vegetable pieces;
(c) Stuffing into casings
(d) Cooking.

Alternatively, the product may be smoked prior to cooking and/or partially dried after cooking.

If a pre-sliced product is to be manufactured, the product is then sliced and vacuum packed.

If dried vegetables are used for the comminuted vegetable content, water needs to be added, preferably as ice, to the required levels. However, if fresh or frozen comminuted vegetables are used little or no water needs to be added to the mixture.

Preferably either the comminuted vegetable or the meat component or both are added in the frozen state to reduce the temperature during the mixing process. This prevents undesirable denaturation of the meat/vegetable proteins.

If dried vegetables are used for the coarse ground vegetable piece component of the sausage, the vegetables are re-hydrated before use.

The casings used may be any conventional casings used in the manufacture of sausages and may be any suitable diameter, for example from 15-135mm.

If a salami product is required a starter culture is added to the meat/vegetable mixture and the product is stuffed into water vapour permeable casings and fermented as for conventional salami products. Advantageously the sugar content of such products may be reduced or completely omitted compared to normal salami because the carbohydrate content of the vegetables provides an adequate food supply for the fermentation micro-organisms.

### Examples

### Example 1

A cooked vegetable sausage was prepared having the following composition:
- 49.6%: Beef/pork mixture
- 17.2%: Comminuted vegetables (corn, carrots and celeriac)
- 26.8%: Coarse ground vegetables (corn, carrots, leek, paprika)
- 4.4%: Binding and colouring agents
- 2.0%: Spices
The sausage prepared could be readily sliced without falling apart.

### Example 2

A cooked vegetable sausage was prepared having the following composition:
- 48.5%: Turkey
- 16.7%: comminuted vegetables (corn and celeriac)
- 28.3%: Coarse ground vegetables (corn, carrots, leek, paprika, peas)
- 4.6%: Binding and colouring agents
- 1.9%: Spices
The sausage prepared could be readily sliced without falling apart.

### Example 3

A salami vegetable sausage was prepared having the following composition.
- 49.4%: Pork
- 19.7%: Comminuted vegetables (corn, carrots, celeriac, paprika, leek)
- 24.7%: Coarse ground vegetables (potato, corn, carrots, leek, paprika, celeriac)
- 5.5%: Binding and colouring agents
- 0.6%: Spices
- 0.1%: Starter culture.

The salami could be readily sliced without falling apart.

### Comparative Example A

A cooked vegetable sausage was prepared having the same composition as Example 1 except that all the vegetable (44%) was added as coarse ground particles.

The sausage could not be sliced without falling apart.

## Claims

1. A sliceable meat product comprising meat and incorporated into the meat product one or more vegetable(s) and having a vegetable content of greater than 30% by weight of the product, wherein 20 - 30% by weight of the vegetable(s) is present as visible coarse ground particles with a particle size of 2 - 10 mm and the remaining vegetable content is finely comminuted.

2. A product according to claim 1 comprising
(a) greater than 30 to about 80% by weight of the vegetable(s);
(b) from 10 to 60% by weight of the meat; and
(c) upto 20% by weight of the functional ingredients.

3. A product according to claim 1 or 2 wherein the product comprises from 40 to 50% by weight of the vegetable(s).

4. A product according to any of the preceding claims wherein the product comprises from 45 to 50% by weight of the meat.

5. A product according to claim 1 or 2 comprising
45-50% meat
15-20% comminuted vegetables
25-30% coarse ground vegetables.

6. A product according to claim 5 comprising
48.5% Turkey
16.7% Comminuted vegetables
28.3% Coarse ground vegetables
4.6% Binding and colouring agents
1.9% Spices.

7. A product according to claim 5 comprising
49.6% Beef/pork mixture
17.2% Comminuted vegetables
26.8% Coarse ground vegetables
4.4% Binding and colouring agents
2.0% Spices.

8. A product according to claim 5 comprising
49.4% Pork
19.7% Comminuted vegetables
24.7% Coarse ground vegetables
5.5% Binding and colouring agents
0.6% Spices
0.1% Starter culture.

9. A product according to any of the preceding claims wherein the product is a cooked sliceable meat product.

10. A product according to any one of claims 1 to 4 wherein the product is a fermented salami-like product.

## Patentansprüche

1. Aufschneidbares Fleischprodukt, umfassend Fleisch und in das Fleischprodukt einverleibt ein oder mehrere Gemüse und mit einem Fleischgehalt von mehr als 30 Gew.-% des Produkts, worin 20 bis 30 Gew.-% des Gemüses als sichtbare grob zerkleinerte Teilchen mit einer Teilchengröße von 2 bis 10 mm vorliegen und der verbliebene Gemüsegehalt fein zerkleinert ist.

2. Produkt nach Anspruch 1, umfassend
(a) mehr als 30 bis 80 Gew.-% Gemüse;
(b) 10 bis 60 Gew.-% Fleisch und
(c) bis zu 20 Gew.-% funktionelle Bestandteile.

3. Produkt nach Anspruch 1 oder 2, worin das Produkt 40 bis 50 Gew.-% Gemüse umfaßt.

4. Produkt nach mindestens einem der vorhergehenden Ansprüche, worin das Produkt 45 bis 50 Gew.-% Fleisch umfaßt.

5. Produkt nach Anspruch 1 oder 2, umfassend
45 bis 50% Fleisch
15 bis 20% zerkleinertes Gemüse
25 bis 30% grob zerkleinertes Gemüse.

6. Produkt nach Anspruch 5, umfassend
48,5% Truthahn
16,7% zerkleinertes Gemüse
28,3% grob zerkleinertes Gemüse
4,6% Binde- und Farbmittel
1,9% Gewürze.

7. Produkt nach Anspruch 5, umfassend
49,6% Rind-/Schweinemischung
17,2% zerkleinertes Gemüse
26,8% grob zerkleinertes Gemüse
4,4% Binde- und Farbmittel
2,0% Gewürze.

8. Produkt nach Anspruch 5, umfassend
49,4% Schwein
19,7% zerkleinertes Gemüse
24,7% grob zerkleinertes Gemüse
5,5% Binde- und Farbmittel
0,6% Gewürze
0,1% Starterkultur.

9. Produkt nach mindestens einem der vorhergehenden Ansprüche, worin das Produkt ein gekochtes, aufschneidbares Fleischprodukt darstellt.

10. Produkt nach mindestens einem der Ansprüche 1 bis 4, worin das Produkt ein fermentiertes salamiähnliches Produkt darstellt.

## Revendications

1. Produit à base de viande qu'on peut trancher comprenant de la viande et un ou plusieurs légume(s) incorporé(s) dans le produit de viande, et ayant un contenu de légumes de plus de 30% en poids du produit, 20 à 30% en poids du/des légume(s) étant présent(s) sous forme de particules broyées grossièrement visibles avec une dimension de particule de 2 à 10 mm et le contenu de légumes restants étant haché finement.

2. Produit selon la revendication 1 comprenant :
(a) plus de 30 à environ 80% en poids de légume(s) ;
(b) de 10 à 60% en poids de viande ; et
(c) jusqu'à 20% en poids d'ingrédients fonctionnels.

3. Produit selon la revendication 1 ou 2, dans lequel le produit comprend de 40 à 50% en poids de légume(s).

4. Produit selon l'une quelconque des revendications précédentes, dans lequel le produit comprend de 45 à 50% en poids de la viande.

5. Produit selon la revendication 1 ou 2, comprenant :
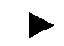 45 à 50% de viande
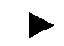 15 à 20% de légumes hachés
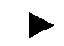 25 à 30% de légumes grossièrement broyés.

6. Produit selon la revendication 5, comprenant :
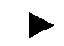 48,5% de dinde
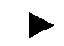 16,7% de légumes hachés
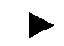 28,3% de légumes broyés grossièrement
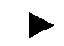 4,6% d'agents liants et colorants
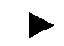 1,9% d'épices.

7. Produit selon la revendication 5, comprenant :
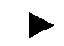 49,6% de mélange de boeuf/porc
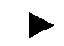 17,2% de légumes hachés
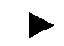 26,8% de légumes broyés grossièrement
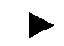 4,4% d'agents de liaison et colorants
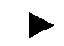 2,0% d'épices.

8. Produit selon la revendication 5, comprenant :
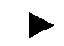 49,4% de porc
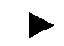 19,7% de légumes hachés
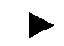 24,7% de légumes broyés grossièrement
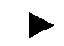 5,5% d'agents liants et colorants
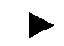 0,6% d'épices
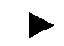 0,1 % de culture d'amorçage.

9. Produit selon l'une quelconque des revendications précédentes, dans lequel le produit est un produit de viande cuit qu'on peut trancher.

10. Produit selon l'une quelconque des revendications 1 à 4, dans lequel le produit est un produit analogue au salami fermenté.
